(19) Europäisches Patentamt
European Patent Office
Office européen des brevets

(11) **EP 1 783 021 A2**

(12) **EUROPEAN PATENT APPLICATION**

(43) Date of publication:
**09.05.2007 Bulletin 2007/19**

(51) Int Cl.:
**B60W 20/00** *(2006.01)*　　**B60W 30/18** *(2006.01)*
**B60W 10/18** *(2006.01)*　　**B60W 10/08** *(2006.01)*
**B60W 10/06** *(2006.01)*　　*B60W 10/18* *(2006.01)*
**B60W 10/08** *(2006.01)*　　*B60W 10/06* *(2006.01)*

(21) Application number: **06255695.6**

(22) Date of filing: **04.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.11.2005 JP 2005322407**

(71) Applicant: **Nissan Motor Company Limited Kanagawa-ku Yokohama-shi, Kanagawa 221-0023 (JP)**

(72) Inventors:
• **Okuda, Tadashi Yokohama-shi Kanagawa 221-0023 (JP)**

• **Yamanaka, Tsuyoshi Yokohama-shi Kanagawa 221-0023 (JP)**
• **Hirata, Takeshi Yokohama-shi Kanagawa 221-0023 (JP)**
• **Hayasaki, Koichi Yokohama-shi Kanagawa 221-0023 (JP)**

(74) Representative: **Holmes, Matthew William Nissan Technical Centre Europe Intellectual Property Department Cranfield Technology Park Moulsoe Road Bedfordshire, MK43 0BD (GB)**

(54) **Hybrid vehicle control**

(57) A hybrid vehicle control system is configured to use automatic braking to compensate for an excess or deficiency of a braking force available from the power train of a hybrid vehicle that occurs when the hybrid vehicle switches from an electric drive (EV) mode to a hybrid drive (HEV) mode when the accelerator pedal depressing amount is detected as being substantially zero. In particular, hybrid vehicle control system determines whether a power train braking force from the power train is sufficient to achieve a target braking force. If the power train braking force is sufficient to achieve the target braking force when an accelerator pedal depressing amount is detected as being substantially zero, then a wheel brake is activated to apply a wheel braking force against a wheel of the vehicle to maintain the target braking force.

Fig. 1

EP 1 783 021 A2

**Description**

The present invention relates to hybrid vehicle control and particularly, but not exclusively, to a control system for a hybrid vehicle having an electric drive (EV) mode in which a drive wheel is solely driven by a motor/generator and a hybrid drive (HEV) mode in which the drive wheel is driven by an engine and the motor/generator or the engine alone. More specifically, the present invention relates to a braking control system for a hybrid vehicle that is configured to perform a coasting (inertial) motion braking force control. Aspects of the invention also relate to a method and to a vehicle.

Japanese Laid-Open Patent Publication No. 11-082260 discloses one example of a conventional hybrid drive system used in a conventional hybrid vehicle. The hybrid vehicle drive control system presented in Japanese Laid-Open Patent Publication No. 11-082260 has a motor/generator arranged between an engine and a transmission so as to be coupled to a shaft that directs the rotation of the engine to the transmission, with a first clutch disposed between the engine and the motor/generator, and a second clutch disposed between the motor/generator and the output shaft of the transmission.

A hybrid vehicle equipped with such conventional hybrid drive system can be put into an electric drive (EV) mode in which the vehicle travels using power from the motor/generator by releasing the first clutch and engaging the second clutch. Such a hybrid vehicle can also be put into a hybrid drive (HEV) mode in which the vehicle can travel using power from both the engine and the motor/generator by connecting both the first clutch and the second clutch.

When such a hybrid vehicle is coasting in the EV mode and regenerative braking of the motor/generator becomes prohibited because the battery is fully charged, the hybrid vehicle switches to coasting in the HEV mode (in which the engine is connected to the drive wheels) in order to use engine braking force.

When the vehicle switches from coasting in the EV mode to coasting in the HEV mode, there is the possibility that an unpleasant change in the braking force will be transmitted to the drive wheels when the first clutch is engaged and the crankshaft of the engine starts rotating or cranking without fuel supplied to the engine. Such an unpleasant change in braking force can be avoided by temporarily releasing the second clutch, then engaging the first clutch and rotating (driving) the crankshaft of the engine with the motor/generator while suspending the fuel supply to the engine, and finally reengaging the second clutch when the rotational speed difference across the second clutch is substantially zero. In this way, the vehicle can be switched more smoothly to a state of coasting in the HEV mode in which the vehicle can be braked with the engine braking force.

However, during the period when the second clutch is being released, the drive wheels are disengaged from both the motor/generator and the engine and can not be braked by either regenerative braking of the motor/generator or engine braking using the engine. Consequently, the coasting state of the vehicle will be temporarily interrupted by an odd feeling of thrusting forward (freewheeling).

Although it does not solve the problem just described, Japanese Laid-Open Patent Publication No. 11-093724 presents another conventional technology that relates to situations in which the state of charge of the battery of a hybrid vehicle is high and regenerative braking by the motor/generator needs to be limited. In such situations, the conventional technology disclosed in this reference increases the throttle opening degree and adjusts the engine pumping loss as the allowable regenerative braking torque declines even during coasting. As a result, the engine braking force compensates for the decline in regenerative braking torque and the total braking force can be maintained.

When the throttle opening of the engine is controlled in accordance with the conventional technology described in Japanese Laid-Open Patent Publication No. 11-093724 such that a decrease in regenerative braking torque is compensated with an engine braking force, the response of the engine braking force with respect to adjustment of the throttle opening is poor. Thus, there is the possibility that the throttle control will not be able to increase the engine braking force at an appropriate timing for offsetting the decrease in the regenerative braking torque. Consequently, the control may not be able to achieve the original objective of offsetting (compensating for) the decline in the regenerative braking torque. Furthermore, the braking force acting on the drive wheels may deviate from the target as result of the engine braking force changing at an inappropriate timing.

In addition to the change in braking force that accompanies the temporary release of the second clutch described above, there are other situations in which the braking force acting on the drive wheels changes. For example, when a hybrid vehicle switches from coasting in the EV mode to coasting in the HEV mode in order to compensate for insufficient regenerative braking torque with an engine braking force, a change in braking force will occur if the mode change is accomplished by engaging the first clutch while leaving the second clutch engaged. In such a case, the engine torque will cause the braking force to change during cranking of the engine. This change in braking force cannot be alleviated with the conventional technology described in Japanese Laid-Open Patent Publication No. 11-093724 because of the response speed is poor when the engine braking force is adjusted by controlling the throttle opening degree.

There is still another situation in which the braking force acting on the drive wheels will change. The braking force acting on the drive wheels will change (decrease) if the regenerative braking torque generated by the motor/generator is reduced due to the state of charge of the battery gradually becoming higher while the hybrid vehicle is coasting in the EV mode. If the throttle opening control technology described in Japanese Laid-Open Patent Publication No. 11-093724 is used in such a situation to adjust the engine braking force to offset the decrease in regenerative braking torque, it will be necessary to switch from the EV mode to the HEV mode in order to use engine braking. This necessity can become troublesome from a control perspective when the traveling conditions are such that it is better to continue traveling in the EV mode.

It is an aim of the invention to address one or more of the above-described problems and to improve upon known technology. Other aims and advantages of the invention will become apparent from the following description, claims and drawings.

Aspects of the invention therefore provide a system, a method and a vehicle as claimed in the appended claims.

According to one aspect of the invention there is provided a hybrid vehicle control system comprising an engine, a motor/generator, a first clutch arranged to change a torque transfer capacity between the engine and the motor/generator, a second clutch arranged to change a torque transfer capacity between the motor/generator and at least one drive wheel and a controller configured to selectively control the first and second clutches to switch between an electric drive mode in which the engine is stopped, the first clutch is released and the second clutch is engaged and a hybrid drive mode in which both of the first and second clutches are engaged, the controller being further configured to determine whether a power train braking force from a power train of a vehicle that drives the drive wheel is sufficient to achieve a target braking force and the controller being further configured to operate a wheel brake to apply a wheel braking force against a wheel of the vehicle to maintain the target braking force when an accelerator pedal depressing amount is detected as being substantially zero and when the power train braking force is not sufficient to achieve the target braking force.

In an embodiment, the controller is configured to apply an engine braking force to the drive wheel to achieve the target braking force by temporarily disengaging the second clutch, rotating a crankshaft of the engine with the motor/generator while suspending supply of fuel to the engine, and then reengaging the second clutch. The controller may be further configured to maintain the target braking force by controlling the wheel braking force of the wheel brake while the second clutch is temporarily disengaged.

According to another aspect of the invention there is provided a hybrid vehicle control system comprising an engine, a motor/generator, a first clutch arranged to change a torque transfer capacity between the engine and the motor/generator, a second clutch arranged to change a torque transfer capacity between the motor/generator and at least one drive wheel and a controller configured to selectively control the first and second clutches to switch between an electric drive mode in which the engine is stopped, the first clutch is released and the second clutch is engaged and a hybrid drive mode in which the both of the first and second clutches are engaged, the controller being further configured to apply a braking force to a vehicle by temporarily slip engaging the second clutch, engaging the first clutch, cranking the engine with the motor/generator while suspending supply of fuel to the engine, and reengaging the second clutch, when an accelerator pedal depressing amount is detected as being substantially zero and the controller being further configured to operate a wheel brake to apply the braking force to the vehicle while the second clutch is slip engaged.

In an embodiment, the controller is configured to operate the wheel brake to apply the braking force while the second clutch is slip engaged to a released state.

In an embodiment, the controller is configured to reengage the second clutch when a rotational speed difference across the second clutch is substantially zero.

In an embodiment, the controller is configured to obtain the braking force by shifting from a regenerative braking force applying state in which a regenerative braking force of the motor/generator is applied to the vehicle to an engine braking force applying state in which the braking force applied to the vehicle, when the accelerator pedal depressing amount is detected as being substantially zero.

In an embodiment, the controller is configured to determine whether a power train braking force from a power train of the vehicle that drives the drive wheel is sufficient to achieve a target braking force. The controller may be configured to operate the wheel brake to apply the wheel braking force when the controller determines the power train braking force is not sufficient to achieve the target braking force.

In an embodiment, the controller is configured to set a sum value of the regenerative braking force of the motor/generator and the engine braking force of the engine as the power train braking force when both of the first and second clutches are engaged.

In an embodiment, the controller is configured to set a sum value of the regenerative braking force of the motor/generator and a first clutch connection braking force corresponding to a torque transfer capacity of the first clutch as the power train braking force when the second clutch is engaged and the first clutch is in a slipping state between an engaged state and a released state.

In an embodiment, the controller is configured to set a current motor braking force and a current first clutch connection braking force according to a current gear of a transmission provided in the power train between the motor/generator and the drive wheel as the motor braking force and the first clutch connection braking force, respectively, when the transmission is not shifting gears. The controller may be further configured to set a target motor braking force and a target first clutch connection braking force according to a target gear of the transmission as the motor braking force and the first clutch connection braking force when the transmission is in shifting gears from the current gear to the target gear.

According to yet another aspect of the invention there is provided a control system for a hybrid vehicle comprising engine means, motor/generator means, first clutch means for transferring torque between the engine means and the motor/generator means, second clutch means for transferring torque between the motor/generator means and at least one drive wheel and control means for selectively controlling the first and second clutch means to switch between an electric drive mode in which the engine means is stopped, the first clutch means is released and the second clutch means is engaged and a hybrid drive mode in which the both of the first and second clutch means are engaged, wherein the control means is arranged to temporarily slip engage the second clutch means, engage the first clutch means, crank the engine means with the motor/generator means while suspending supply of fuel to the engine means and reengage the second clutch means when an accelerator pedal depressing amount is detected as being substantially zero and to operate a wheel brake to apply a braking force to the vehicle while the second clutch means is slip engaged.

According to a further aspect of the invention there is provided a hybrid vehicle control system comprising first power supply means for supplying a first source of power, second power supply means for supplying a second source of power, first power transfer means for selectively changing a torque transfer capacity between the first and second power supply means, second power transfer means for selectively changing a torque transfer capacity between the second power supply means and at least one drive wheel of a vehicle and control means for selectively controlling the first and second power transfer means to switch between an electric drive mode in which the first power supply means is stopped, the first power transfer means is in a non-torque transferring state and the second power transfer means is in a torque transferring state and a hybrid drive mode in which both of the first and second power transfer means are in a torque transferring state, the control means further including a function for shifting from a regenerative braking force applying state to an engine braking force applying state by temporarily slip engaging the second power transfer means, engaging the first power transfer means, rotating the first power supply means with the second power supply means while suspending supply of fuel to the first power supply means, and reconnecting the second power transfer means, when the accelerator pedal depressing amount is detected as being substantially zero, the control means further including a function for operating a wheel brake to apply a wheel braking force to the vehicle while the second power transfer means is slip engaged.

According to a still further aspect of the invention there is provided a method of controlling a hybrid vehicle comprising selectively changing a torque transfer capacity between an engine and a motor/generator using a first clutch, selectively changing a torque transfer capacity between the motor/generator and at least one drive wheel of a vehicle, selectively control the first and second clutches to switch between an electric drive mode in which the engine is stopped, the first clutch is released and the second clutch is engaged and a hybrid drive mode in which both of the first and second clutches are engaged, shifting from a regenerative braking force applying state to an engine braking force applying state by temporarily slip engaging the second clutch, engaging the first clutch, cranking the engine with the motor/generator while suspending supply of fuel to the engine, and reengaging the second clutch, when the accelerator pedal depressing amount is detected as being substantially zero and operating a wheel brake to apply a wheel braking force to the vehicle while the engagement of the second clutch is slip engaged.

Embodiments of the invention are based on the idea that instead of using engine braking to counterbalance the change in the braking force that occurs in the situations described above, the braking force acting on the drive wheels of a hybrid vehicle can be maintained by automatically operating a service brake that acts on the drive wheels and can be operated with a brake pedal. With this approach, since the control response obtained by automatically operating a service brake is much better than the control response obtained with engine braking and since it is not necessary to change to the HEV mode, the braking force acting on the drive wheels can be stabilized without encountering the various problems described in the preceding paragraphs. The object of the present invention is to provide a hybrid vehicle control device that resolves the aforementioned problems.

For example, a hybrid vehicle control system in accordance with one embodiment is basically provided with an engine, a motor/generator, a first clutch, a second clutch and a controller. The first clutch is arranged to change a torque transfer capacity between the engine and the motor/generator. The second clutch is arranged to change a torque transfer capacity between the motor/generator and at least one drive wheel. The controller is configured to selectively control the first and second clutches to switch between an electric drive mode in which the engine is stopped, the first clutch is released and the second clutch is engaged and a hybrid drive mode in which both of the first and second clutches are engaged. The controller is further configured to determine whether a power train braking force from a power train of a vehicle that drives the drive wheel is sufficient to achieve a target braking force. The controller is further configured to operate a wheel brake to apply a wheel braking force against a wheel of the vehicle to maintain the target braking force when an accelerator pedal depressing amount is detected as being substantially zero and when the power train braking force is not sufficient to achieve the target braking force.

Within the scope of this application it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:

Figure 1 is a schematic plan view of a power or drive train of a hybrid vehicle in which a hybrid vehicle control system in accordance with one embodiment of the present invention can be applied;

Figure 2 is a schematic plan view of a power or drive train of another hybrid vehicle in which another hybrid vehicle control system in accordance with another embodiment of the present invention can be applied;

Figure 3 is a schematic plan view of a power or drive train of the hybrid vehicle in which another hybrid vehicle drive control system in accordance with another embodiment of the present invention can be applied;

Figure 4 is a block diagram of the hybrid vehicle control system of the hybrid vehicle control device for controlling the power trains shown in Figures 1 to 3 in accordance with the embodiment of the present invention;

Figure 5 is a flowchart showing the main routine of a drive force control program executed by an integrated controller of the control system of the hybrid vehicle control device shown in Figure 4 in accordance with the embodiment of the present invention;

Figure 6 is a flowchart showing a subroutine of the drive force control program for computing the target automatic braking force in accordance with the embodiment of the present invention;

Figures 7(A) and 7(B) are a series of flowcharts showing a subroutine of the target automatic drive force computing subroutine shown in Figure 6 for computing the power train deliverable braking force in accordance with the embodiment of the present invention;

Figure 8 is a characteristic curve diagram illustrating a map used to find the final target driving/braking force in accordance with the embodiment of the present invention;

Figure 9 is a characteristic curve diagram illustrating a map used to find the efficiency of the automatic transmission in accordance with the embodiment of the present invention;

Figure 10 is a characteristic curve diagram illustrating a map used to find the engine friction in accordance with the embodiment of the present invention;

Figure 11 is a characteristic curve diagram illustrating a map used to determine showing how the vehicle requested braking force, the drive wheel target braking force, and the non-drive wheel target braking force change with respect to the master cylinder pressure in accordance with the embodiment of the present invention;

Figure 12 is an operation time chart illustrating the operation of the control process executed by the hybrid vehicle control system when the vehicle shifts from coasting in the EV mode to coasting in the HEV mode by temporarily releasing the second clutch in accordance with the embodiment of the present invention;

Figure 13 is an operation time chart illustrating the operation of the control process executed by the hybrid vehicle control system when the vehicle shifts from coasting in the EV mode to coasting in the HEV mode by maintaining the engagement of the second clutch in accordance with the embodiment of the present invention; and

Figure 14 is an operation time chart illustrating the operation of the control process executed by the hybrid vehicle control system when the vehicle is coasting in the EV mode and regenerative braking is gradually limited in accordance with the embodiment of the present invention.

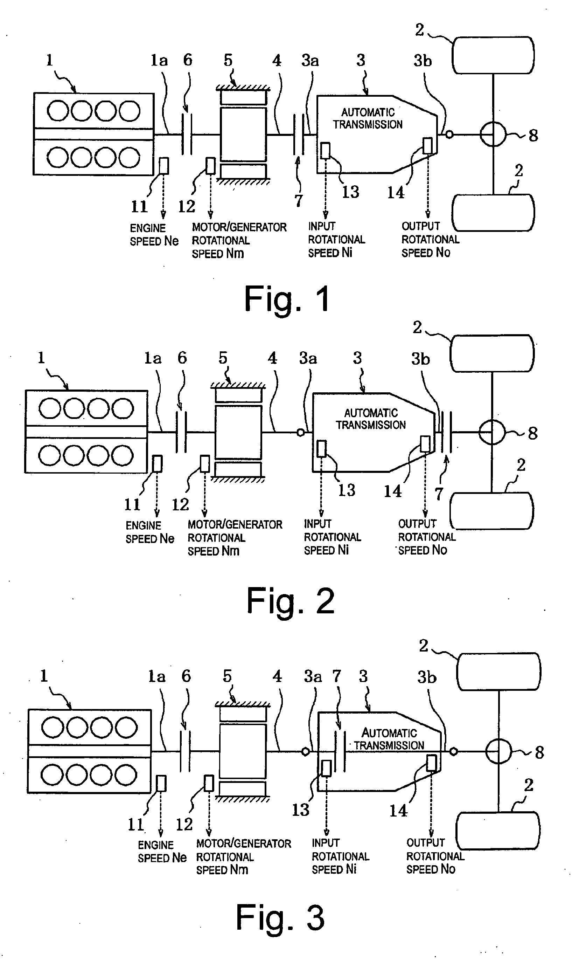

Referring initially to Figure 1 to 3, a front engine/ rear wheel drive vehicle (rear wheel hybrid vehicle) is illustrated in each of the Figures that is equipped with a hybrid vehicle control system in accordance with one preferred embodiment of the present invention. Basically, the hybrid vehicles of Figures 1 to 3 illustrate three examples of alternate power trains of hybrid vehicles in which the hybrid vehicle drive control system in accordance with the present invention can be applied. Basically, each hybrid vehicle includes, among other things, an internal combustion engine 1 with a crankshaft 1a, a pair of rear drive wheels 2, an automatic transmission 3 with an input shaft 3a, a power transfer shaft 4, a motor/generator 5, a first clutch 6 and a second clutch 7. In the power train of the hybrid vehicle shown in Figure 1, the automatic transmission 3 is arranged rearward of and in direct alignment with the engine 1 in the same manner as in a regular rear wheel drive automobile. The motor/ generator 5 is operatively arranged on the shaft 4 that serves to transfer the rotation of the crankshaft 1a of the engine 1 to the input shaft 3a of the automatic transmission 3. As explained below, the hybrid vehicle control system of the present invention is configured to perform a coasting braking force control in accordance with the present invention.

The motor/generator 5 is configured and arranged such that it can be used as a motor or an electric generator. As seen in Figure 1, the motor/generator 5 is operatively arranged between the engine 1 and the automatic transmission 3. The first clutch 6 is operatively arranged between the motor/generator 5 and the engine 1, i.e., more specifically, between the shaft 4 and the engine crankshaft 1a. The first clutch 6 is configured and arranged to selectively engage or disengage the connection between the engine 1 and the motor/generator 5. The first clutch 6 is configured and arranged such that the torque transfer capacity thereof can be changed either continuously or in a stepwise manner. For example, the first clutch 6 can be a multi-plate wet clutch configured and arranged such that its torque transfer capacity can be changed by controlling the flow rate of a hydraulic clutch fluid (hydraulic oil) and the pressure of the hydraulic clutch fluid (clutch connection hydraulic pressure) either continuously or in a stepwise fashion by a proportional solenoid.

The second clutch 7 is provided between the motor/generator 5 and the automatic transmission 3, i.e., more specifically, between the shaft 4 and the transmission input shaft 3a. The second clutch 7 is configured and arranged to selectively engage or disengage the connection between the motor/generator 5 and the automatic transmission 3. Similarly to the first clutch 6, the second clutch 7 is configured and arranged such that the torque transfer capacity thereof can be changed either continuously or in a stepwise manner. For example, the second clutch 7 can be a multi-plate wet clutch configured such that its torque transfer capacity can be changed by controlling the flow rate of a hydraulic clutch fluid (hydraulic oil) and the pressure of the hydraulic clutch fluid (clutch connection hydraulic pressure) continuously or in a stepwise fashion by a proportional solenoid.

In this embodiment of the present invention, the automatic transmission 3 is preferably a conventional automatic transmission such as one presented in pages C-9 to C-22 of the "Nissan Skyline New Model (CV35) Handbook" published by Nissan Motor Company, Ltd. More specifically, the automatic transmission 3 is configured and arranged such that a plurality of friction elements (clutches and brakes) can be selectively engaged and disengaged and the power transmission path (e.g., first gear, second gear, etc.) is determined based on the combination of the engaged and disengaged friction elements. The automatic transmission 3 is configured and arranged to transfer the rotation of the input shaft 3a to an output shaft 3b after converting the rotation at a gear ratio corresponding to the selected gear. The rotation of the output shaft 3b is distributed to the left and right rear wheels 2 by a differential gear unit 8 and thereby contributes to moving the vehicle. Of course, it will be apparent to those skilled in the art from this disclosure that the automatic transmission 3 is not limited to a step-type automatic transmission like that just described, and it is also acceptable to use a continuously variable transmission (CTV).

When the vehicle is traveling under low load/low speed conditions, such as when the vehicle is starting to move from a stopped state, the vehicle requests an electric drive (EV) mode. Under the EV mode, the power train shown in Figure 1 is controlled such that the first clutch 6 is released, the second clutch 7 is engaged, and the automatic transmission 3 is in a power transmitting state.

When the motor/generator 5 is driven under these conditions, the output rotation of the motor/generator 5 alone is transferred to the transmission input shaft 3a and the transmission 3 transfers the rotation of the input shaft 3a to the transmission output shaft 3b at a gear ratio corresponding to the selected gear. The rotation of the transmission output shaft 3b is then transmitted to the rear wheels 2 through the differential gear unit 8 and the vehicle moves in the EV mode using output from only the motor/generator 5.

When the vehicle is traveling at a high speed, under a large load, or under conditions in which the amount of electric power that can be extracted from the battery is small, the vehicle requests a hybrid drive (HEV) mode. Under the HEV mode, the power train is controlled such that the first clutch 6 and the second clutch 7 are both engaged and the automatic transmission 3 is in a power transmitting state. In this state, the output rotation from the engine 1 or the output rotations from both the engine 1 and the motor/generator 5 are transferred to the transmission input shaft 3a and the transmission 3 transfers the rotation of the input shaft 3a to the transmission output shaft 3b at a gear ratio corresponding to the selected gear. The rotation of the transmission output shaft 3b is then transmitted to the rear wheels 2 through the differential gear unit 8 and the vehicle moves in the HEV mode using output from both the engine 1 and the motor/generator 5 or only the engine 1.

When the vehicle is traveling in the HEV mode and the engine 1 is running at optimum fuel efficiency such that a surplus of energy is produced, the surplus energy is used to operate the motor/generator 5 as an electric generator and, thereby, convert the surplus energy into electric energy. The generated electric energy can then be stored and used later to drive the motor/generator 5 as a motor, thereby improving the fuel efficiency of the engine 1.

Although, in Figure 1, the second clutch 7 (which is configured and arranged to connect and disconnect the motor/generator 5 to and from the drive wheels 2) is disposed between the motor/generator 5 and the automatic transmission 3, the same function can be achieved by disposing the second clutch 7 between the automatic transmission 3 and the differential gear unit 8 as shown in Figure 2.

Also, instead of providing a dedicated second clutch 7 in front of the automatic transmission 3 as in Figure 1 or in back of the automatic transmission 3 as in Figure 2, it is also acceptable to use an existing friction element that is provided inside the automatic transmission 3 for selecting a forward gear or a reverse gear as the second clutch 7, as shown in Figure 3. In the structure shown in Figure 3, when the friction element that constitutes the second clutch 7 is engaged so as to execute the mode selection function (i.e., switching between the EV mode and the HEV mode), the same friction element also functions to put the automatic transmission into a power transmitting state. Since a dedicated second clutch is not required in such structure shown in Figure 3, this arrangement is highly advantageous from the standpoint of cost.

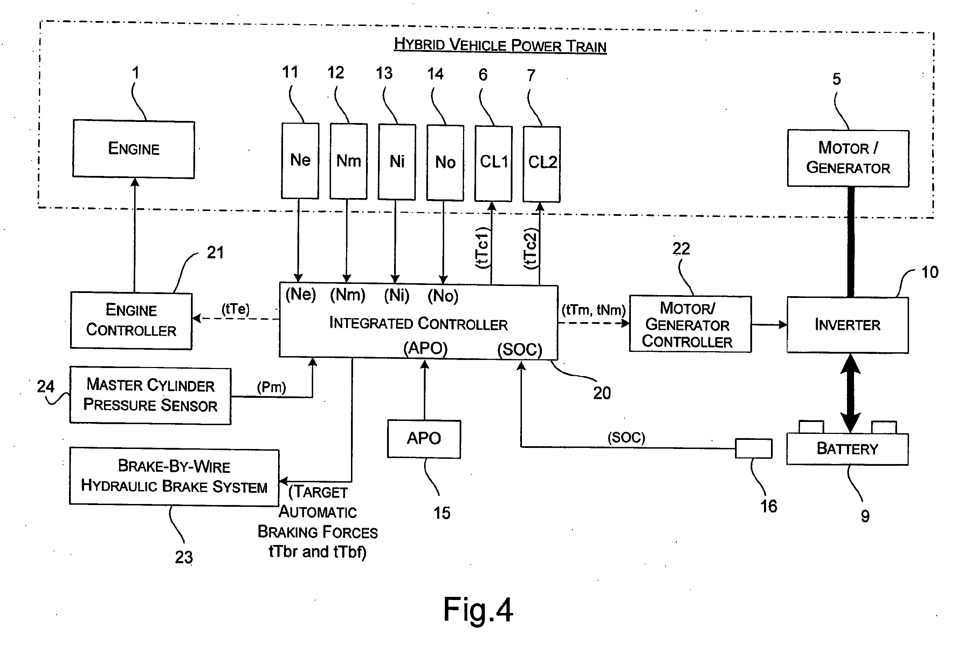

Figure 4 is a block diagram illustrating a system for controlling the hybrid vehicle power train comprising the engine 1, the motor/generator 5, the first clutch 6, and the second clutch 7 as shown in Figures 1 to 3. In the explanations of the hybrid vehicle control system of the present invention below, the power train shown in Figure 1 is used as the power train of the hybrid vehicle in which the hybrid vehicle control system is applied. However, it will be apparent to those skilled in the art of this disclosure that this control can be easily adapted to the other power trains shown in Figures 2 and 3.

The control system shown in Figure 4 has an integrated controller 20 that is configured to execute integrated control of the operating point of the power train. The integrated controller 20 is configured to specify the operating point of the power train in this example in terms of a target engine torque tTe, a target motor/generator torque tTm (a target motor/generator rotational speed tNm is also acceptable), a target torque transfer capacity tTc1 of the first clutch 6, and a target torque transfer capacity tTc2 of the second clutch 7.

The integral controller 20 preferably includes a microcomputer with a drive wheel braking force compensation control program that controls the target automatic braking forces as discussed below. The integrated controller 20 can also include other conventional components such as an input interface circuit, an output interface circuit, and storage devices such as a ROM (Read Only Memory) device and a RAM (Random Access Memory) device. The microcomputer of the integrated controller 20 is programmed to control the operating point of the power train. The memory circuit stores processing results and control programs such as ones for the target automatic braking forces calculation operation that are run by the processor circuit. The integrated controller 20 is operatively coupled to the various component of the hybrid vehicle in a conventional manner. The internal RAM of the integrated controller 20 stores statuses of operational flags and various control data. The internal ROM of the integrated controller 20 stores the data used for various operations. The integrated controller 20 is capable of selectively controlling any of the components of the control system in accordance with the control program. It will be apparent to those skilled in the art from this disclosure that the precise structure and algorithms for the integrated controller 20 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The integrated controller 20 is further configured to issue commands indicating a target rear wheel (drive wheel) automatic braking force tTbr and a target front wheel (non-drive wheel) automatic braking force tTbf to a brake-by-wire (electronically controlled) hydraulic brake system 23 in order to achieve the object of the present invention.

The brake-by-wire hydraulic brake system 23 utilizes a conventional technology for electronically controlling a service brake configured to control a braking force imparted to a wheel in response to operation of a brake pedal. More specifically, the brake-by-wire hydraulic brake system 23 has a master cylinder configured to generate a hydraulic pressure corresponding to the force with which the brake pedal is depressed and wheel cylinders constituting a wheel brake unit. The brake-by-wire hydraulic brake system 23 is configured such that the master cylinder and the wheel cylinders are allowed to communicate with each other hydraulically when there is a problem with the electronic control system. Thus, in such case, the brake-by-wire hydraulic brake system 23 can function in the same manner as a regular hydraulic brake system. Meanwhile, when the electronic control system is functioning normally, the hydraulic communication between the master cylinder and the wheel cylinders is shut off and the hydraulic pressures of the wheel cylinders are controlled electronically based on a detected value of the master cylinder pressure. Furthermore, when necessary, the wheel cylinder pressures can be electronically controlled based on control factors other than the detected value of the master cylinder pressure.

When the brake-by-wire hydraulic brake system 23 receives the target rear (drive) wheel automatic braking force tTbr and the target front (non-drive) wheel automatic braking force tTbf, the brake-by-wire hydraulic brake system 23 is configured to supply a hydraulic pressure corresponding to the target automatic braking force tTbr to the wheel cylinders of the rear (drive) wheels 2 and a hydraulic pressure corresponding to the target automatic braking force tTbf to the wheel cylinders of the front (non-drive) wheels independently from the detected value of the master cylinder pressure. As a result, automatic braking can be executed such that the target automatic braking force tTbr is generated at the rear (drive) wheels 2 and the target automatic braking force tTbf is generated at the front (non-drive) wheels.

The integrated controller 20 operatively connected to the following sensors: an engine speed sensor 11, a motor/generator speed sensor 12, a transmission input rotational speed sensor 13, a transmission output rotational speed sensor 14, an accelerator pedal position sensor 15, a state of charge sensor 16 and a master cylinder pressure sensor 24. The engine speed sensor 11, the motor/generator speed sensor 12, the input rotational speed sensor 13, and the output rotational speed sensor 14 are arranged as shown in Figures 1 to 3. The engine speed sensor 11 is configured and arranged to detect an engine speed Ne of the engine 1 and produce a signal indicative of the detected engine speed Ne that is inputted to the integrated controller 20. The motor/generator speed sensor 12 is configured and arranged to detect a rotational speed Nm of the motor/generator 5 and produce a signal indicative of the detected rotational speed Nm that is inputted to the integrated controller 20. The transmission input rotational speed sensor 13 is configured and arranged to detect a rotational speed Ni of the input shaft 3a of the automatic transmission 3 and produce a signal indicative of the detected rotational speed Ni that is inputted to the integrated controller 20. The transmission output rotational speed sensor 14 is configured and arranged to detect a rotational speed No of the output shaft 3b of the automatic transmission 3 and produce a signal indicative of the detected rotational speed No that is inputted to the integrated controller 20. The accelerator pedal position sensor 15 is configured and arranged to detect an accelerator pedal depression amount (accelerator position APO) and produce a signal indicative of the detected accelerator pedal depression amount (APO) that is inputted to the integrated controller 20. The detected accelerator pedal depression amount APO expresses the load demand imposed on the engine 1. The state of charge sensor 16 is configured and arranged to detect a state of charge SOC (usable electric power) of a battery 9 in which electric power for the motor/generator 5 is stored and produce a signal indicative of the detected state of charge SOC that is inputted to the integrated controller 20. The master cylinder pressure sensor 24 is configured and arranged to detect a master cylinder hydraulic pressure Pm and produce a signal indicative of the detected hydraulic pressure Pm of the master cylinder that is inputted to the integrated controller 20. Thus, the integrated controller 20 receives these input signals for determining the operating point of the power train.

The integrated controller 20 is configured to select an operating (traveling) mode (EV mode or HEV mode) that is capable of delivering the drive force desired by the driver based on the accelerator position APO, the battery state of charge SOC, and the transmission output rotational speed No (vehicle speed VSP). Then the integrated controller 20 is configured to compute the target engine torque tTe, the target motor/generator torque tTm (target motor/generator rotational speed tNm also acceptable), the target first clutch torque transfer capacity tTc1, and the target second clutch torque transfer capacity tTc2. The target engine torque tTe is fed to the engine controller 21 and the target motor/generator torque tTm (or the target motor/generator rotational speed tNm) is fed to the motor/generator controller 22.

The engine controller 21 is configured to control the engine 1 such that the engine torque Te becomes equal to the target engine torque tTe. The motor/generator controller 22 is configured to control the motor/generator 5 through the battery 9 and an inverter 10 such that the torque Tm (or the rotational speed Nm) of the motor/generator 5 becomes equal to the target motor/generator torque tTm (or the target motor/generator rotational speed tNm).

The integrated controller 20 is configured to supply a solenoid current corresponding to the target first clutch torque transfer capacity tTc1 to a connection control solenoid (not shown) of the first clutch 6 and a solenoid current corresponding to the target second clutch torque transfer capacity tTc2 to a connection control solenoid (not shown) of the second clutch 7. In this way, the connection force (holding force) of the first clutch 6 is controlled such that the torque transfer capacity Tc1 of the first clutch 6 becomes equal to the target torque transfer capacity tTc1 and the connection force of the second clutch 7 is controlled such that the torque transfer capacity Tc2 of the second clutch 7 becomes equal to the target torque transfer capacity tTc2.

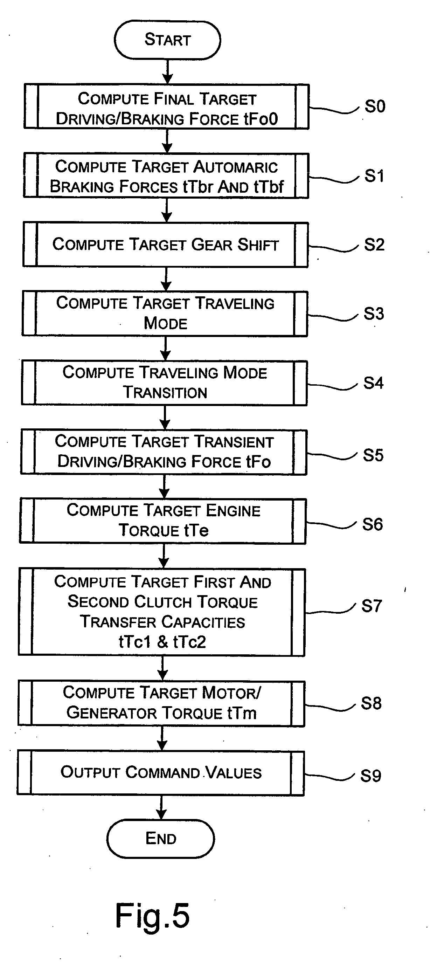

Figure 5 shows a main routine executed by the integrated controller 20 in order to select the traveling mode (EV mode or HEV mode) and compute the target engine torque tTe, the target motor/generator torque tTm (or the target motor/generator rotational speed tNm), the target first clutch torque transfer capacity tTc1, the target second clutch torque transfer capacity tTc2, and the target automatic braking forces tTbr and tTbf.

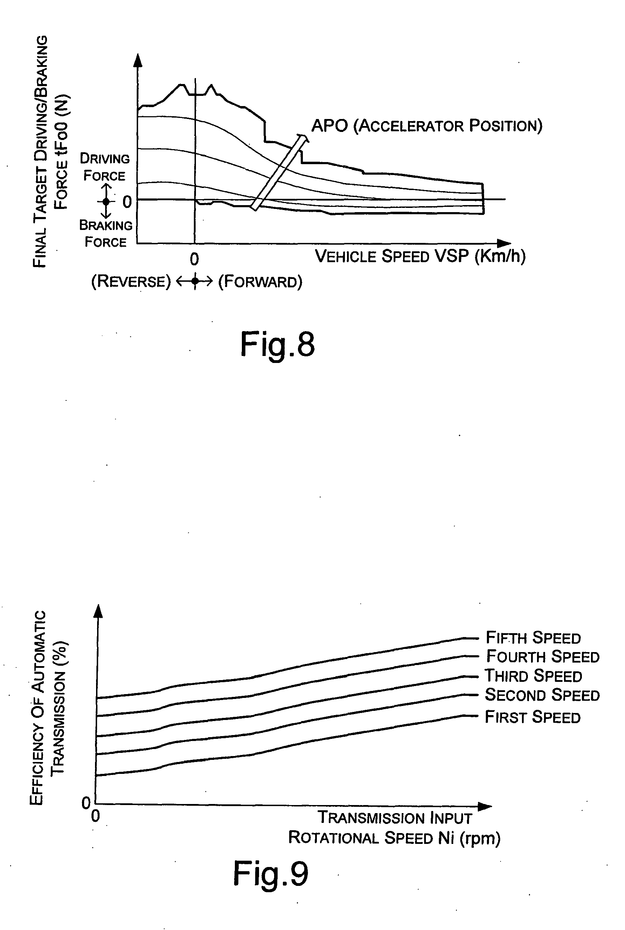

In step S0, the integrated controller 20 is configured to use a prescribed final target driving/braking force map such as one shown in Figure 8 to compute a final target driving/braking force tFo0 (a negative value indicates a braking force) in normal condition based on the accelerator position APO and the vehicle speed VSP.

In step S1, the integrated controller 20 is configured to compute the target automatic braking force tTbr for the rear wheels 2 and the target automatic braking force tTbf for the front wheels. The target automatic braking forces tTbr and tTbf will be used to control the brake-by-wire hydraulic brake system 23 shown in Figure 4 to compensate for a change in the braking force obtained from the power train during coasting (inertial motion) in accordance with the present invention. As used herein, "coasting" means a condition of vehicle in which an accelerator pedal depression amount (throttle opening) is substantially zero and the drive wheels 2 of the vehicle are not actively driven by the engine 1 or the motor/generator 5. The term "coasting" as used herein can include a condition of the vehicle in which the driver depresses a brake pedal to apply a braking force to the vehicle while the drive wheels 2 rotate by inertial motion.

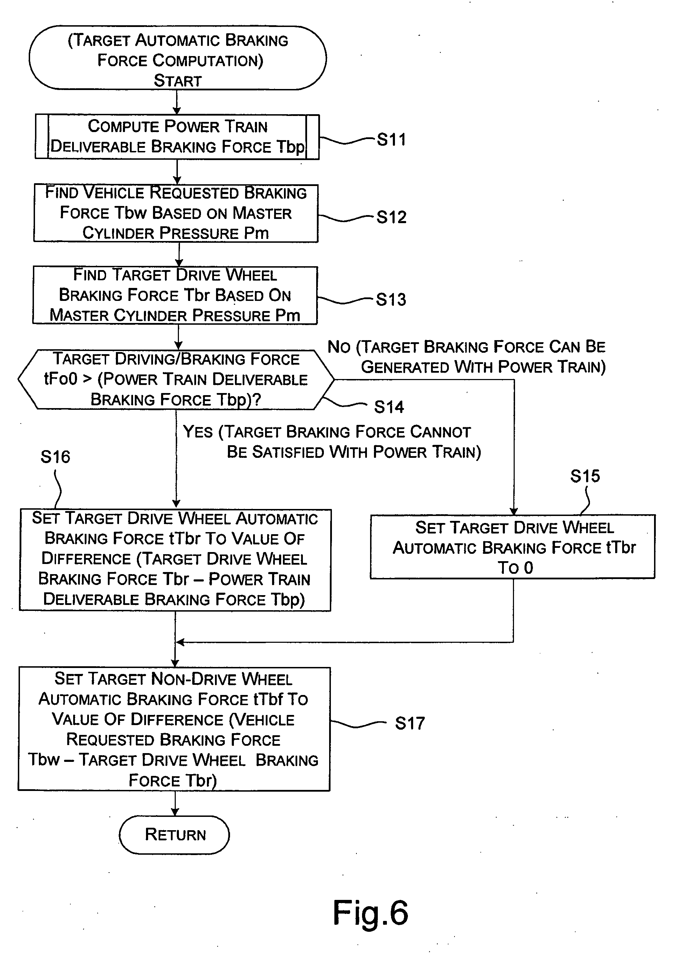

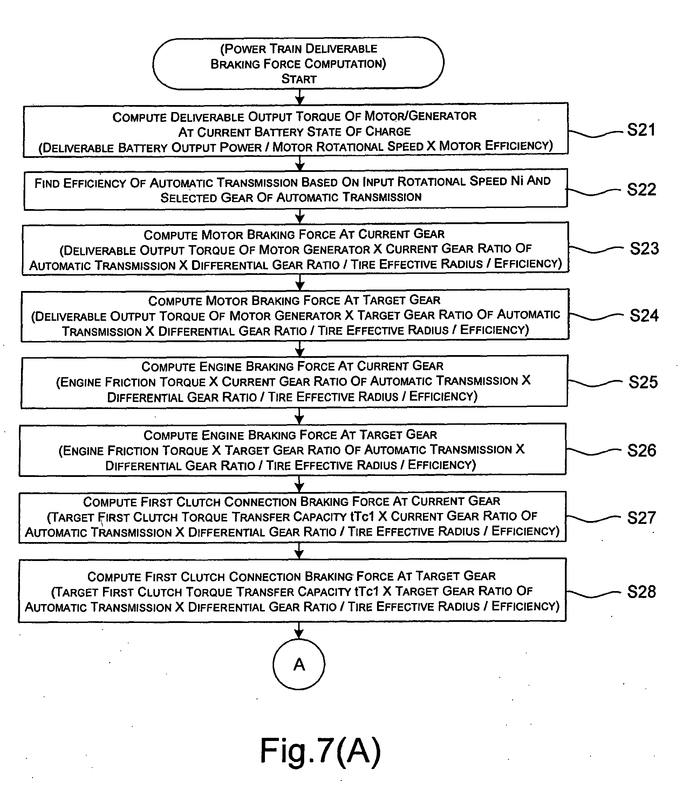

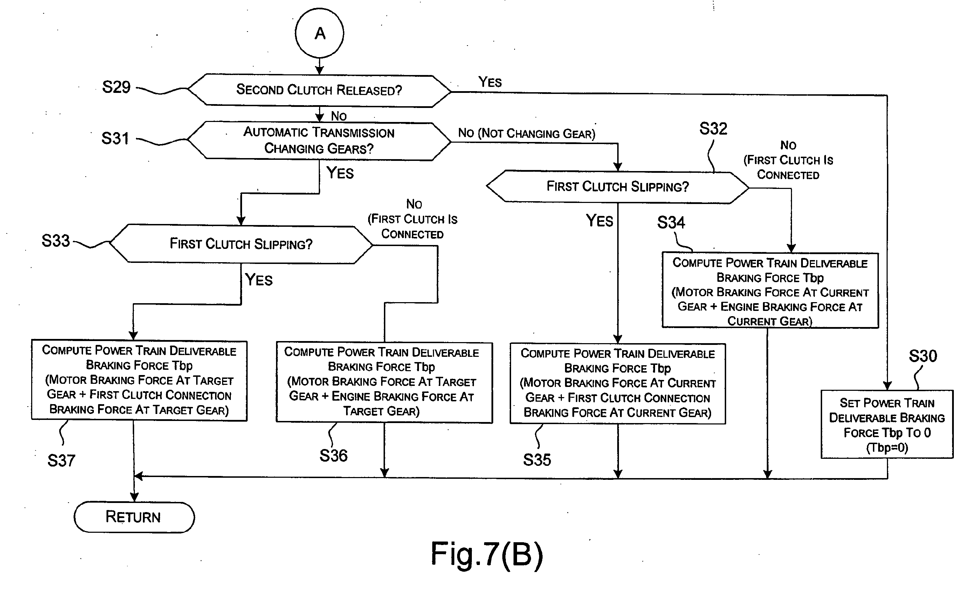

The control programs (subroutines) shown in Figures 6, 7(A) and 7(B) are executed in order to accomplish the calculation of the target automatic braking forces tTbr and tTbf in step S1. The method of calculating the target automatic braking forces tTbr and tTbf will now be explained with reference to Figures 6, 7(A) and 7(B).

In step S11 of Figure 6, the integrated controller 20 is configured to compute the power train deliverable braking force tTbp (power train braking force), which is the braking force that can be obtained from the power train (which is the drive system configured to drive the wheels 2) when the vehicle is coasting. The integrated controller 20 accomplishes step S11 by executing the control program shown in Figures 7(A) and 7(B).

In step S21 of Figure 7(A), the integrated controller 20 is configured to calculate the amount of output torque that can be obtained from the motor/generator 5 at the current state of charge SOC of the battery 9 by dividing the deliverable battery output power (which can be determined based on the state of charge SOC of the battery 9) by the motor/generator rotational speed Nm and multiplying the resulting value by the motor efficiency.

In step S22, the integrated controller 20 is configured to find the efficiency of the automatic transmission 3 based on the transmission input rotational speed Ni and the currently selected gear using a prescribed map such as one shown in Figure 9.

In step S23, the integrated controller 20 is configured to calculate the braking force that the motor/generator 5 can produce under the currently selected gear of the automatic transmission 3. The calculation is accomplished by first finding the product of the amount of output torque that can be obtained from the motor/generator 5 at the current state of charge SOC of the battery 9 (calculated in step S21), the gear ratio corresponding to the currently selected gear, and the gear ratio of the differential gear unit 8. The resulting product value is then divided successively by the dynamic radius of the tires of the drive wheels 2 and the efficiency of the automatic transmission 3 (determined in step S22).

In step S24, the integrated controller 20 is configured to calculate the braking force that the motor/generator 5 will be able to produce under the gear that the automatic transmission 3 will enter if the automatic transmission 3 is changing gears. The calculation is accomplished by first finding the product of the amount of output torque that can be obtained from the motor/generator 5 at the current state of charge SOC of the battery (calculated in step S21), the gear ratio corresponding to the gear the automatic transmission 3 will enter, and the gear ratio of the differential gear unit 8. The resulting product value is then divided successively by the dynamic radius of the tires of the drive wheels 2 and the efficiency of the automatic transmission 3 (determined in step S22).

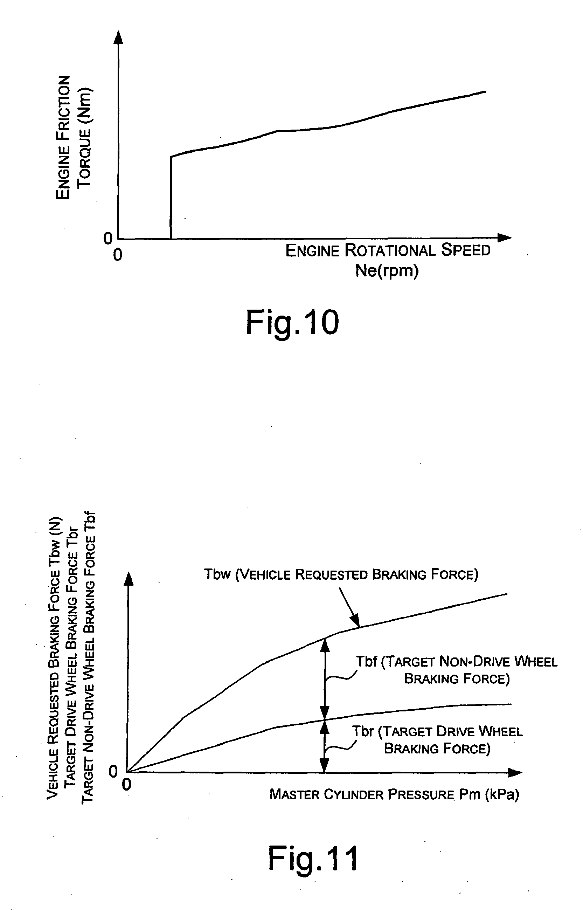

In step S25, the integrated controller 20 is configured to calculate the engine braking force that can be obtained if the crankshaft 1a of the engine 1 is rotated without supplying fuel to the engine 1 under the currently selected gear of the automatic transmission 3. The calculation is accomplished by first finding the engine friction torque based on the engine speed Ne using a map such as one shown in Figure 10 and then finding the product of the engine friction torque, the gear ratio corresponding to the currently selected gear, and the gear ratio of the differential gear unit 8. The resulting product value is then divided successively by the dynamic radius of the tires of the drive wheels 2 and the efficiency of the automatic transmission 3 (determined in step S22).

In step S26, the integrated controller 20 is configured to calculate the engine braking force that can be obtained if the crankshaft 1a of the engine 1 is rotated without supplying fuel to the engine 1 under the gear that the automatic transmission 3 will enter if the automatic transmission 3 is changing gears. The calculation is accomplished by first finding the engine friction torque based on the engine speed Ne using the map such as one shown in Figure 10 and then finding the product of the engine friction torque, the gear ratio corresponding to the currently selected gear, and the gear ratio of the differential gear unit 8. The resulting product value is then divided successively by the dynamic radius of the tires of the drive wheels 2 and the efficiency of the automatic transmission 3 (determined in step S22).

In step S27, the integrated controller 20 is configured to calculate the clutch connection braking force that the first clutch 6 can produce by rotating the crankshaft 1a of the engine 1 under the currently selected gear of the automatic transmission 3. The calculation is accomplished by first finding the product of the target torque transfer capacity tTc1 of the first clutch 6, the gear ratio corresponding to the currently selected gear, and the gear ratio of the differential gear unit 8. The resulting product value is then divided successively by the dynamic radius of the tires of the drive wheels 2 and the efficiency of the automatic transmission 3 (determined in step S22).

In step S28, the integrated controller 20 is configured to calculate the clutch connection braking force that the first clutch 6 can produce by rotating the crankshaft of the engine 1 under the gear that the automatic transmission 3 will enter if the automatic transmission 3 is changing gears. The calculation is accomplished by first finding the product of the target torque transfer capacity tTc1 of the first clutch 6, the gear ratio corresponding to the gear the automatic transmission 3 will enter, and the gear ratio of the differential gear unit 8. The resulting product value is then divided successively by the dynamic radius of the tires of the drive wheels 2 and the efficiency of the automatic transmission 3 (determined in step S22).

Next, in step S29 in Figure 7(B), the integrated controller 20 is configured to check if the second clutch 7 is in a released state. The reason for checking if the second clutch 7 is in a released state will now be explained. The hybrid vehicle will shift to coasting in the HEV mode if the vehicle is coasting in the EV mode and regenerative braking by the motor/generator 5 becomes prohibited due to the state of charge SOC of the battery 9. During the switch from the EV mode to the HEV mode, the crankshaft 1a of the engine 1 is rotated by engaging the first clutch 6 and driving the motor/generator 5 without supplying fuel to the engine 1. Also during the switch from the EV mode to the HEV mode, the second clutch 7 is temporarily released in order to prevent the torque change associated with starting to rotate the crankshaft 1a of the engine 1 from being transmitted to the drive wheels 2. The second clutch 7 is reengaged at a time when the rotational speed difference across the second clutch 7 is zero. When the second clutch 7 is reengaged, the target braking force can be achieved with the engine braking force. The present invention keeps the braking force at the target value throughout the mode transition by compensating for the fact that the braking force will otherwise go to zero when the second clutch 7 is temporarily disengaged. Therefore, in step S29, the integrated controller checks if the second clutch 7 is in a released state.

If the integrated controller 20 determines that the second clutch 7 is in a released state in step S29, the integrated controller 20 is configured to substitute 0 for the power train deliverable braking force Tbp in step S30 because the release of the second clutch 7 causes the braking force from the power train drop to zero.

On the other hand, if the integrated controller 20 determines that the second clutch 7 is engaged in step S29, the integrated controller 20 is configured to proceed to step S31 and to check if the automatic transmission 3 is in the process of changing gears. If the automatic transmission 3 is not in the process of changing gears (No in step S31), then the integrated controller 20 is configured to proceed to step S32 and to determine if the first clutch 6 is slipping i.e., between the engaged state and the released state.

If the integrated controller 20 determines that the automatic transmission 3 is in the process of changing gears (Yes in step S31), the integrated controller 20 is configured to proceed to step S33 and to determine if the first clutch 6 is slipping i.e., between the engaged state and the released state.

If the integrated controller 20 determines in step S31 that the automatic transmission 3 is not changing gears and determines in step S32 that the first clutch 6 is in an engaged state (No in step S32), then the integrated controller 20 is configured to proceed to step S34 and to calculate the power train deliverable braking force Tbp as the sum of the braking force that can be obtained from the motor/generator 5 with the current gear of the automatic transmission 3 (calculated in Figure 23) and the engine braking force that can be obtained with the current gear of the automatic transmission 3 (calculated in step S25).

If the integrated controller 20 determines in step S31 that the automatic transmission 3 is not changing gears and determines in step S32 that the first clutch 6 is in a slipping state (Yes in step S32), then the integrated controller 20 is configured to proceed to step S35 and to calculate the power train deliverable braking force Tbp as the sum of the braking force that can be obtained from the motor/generator 5 with the current gear of the automatic transmission 3 (calculated in Figure 23) and the first clutch connection braking force that can be obtained with the current gear of the automatic transmission 3 (calculated in step S27).

If the integrated controller 20 determines in step S31 that the automatic transmission 3 is changing gears and determines in step S33 that the first clutch 6 is in an engaged state (No in step S33), then the integrated controller 20 is configured to proceed to step S36 and to calculate the power train deliverable braking force Tbp as the sum of the braking force that can be obtained from the motor/generator 5 with the gear that the automatic transmission 3 will enter (calculated in Figure 24) and the engine braking force that can be obtained with the gear that the automatic transmission 3 will enter (calculated in step S26).

If the integrated controller 20 determines in step S31 that the automatic transmission 3 is not changing gears and determines in step S33 that the first clutch 6 is in a slipping state (Yes in step S33), then the integrated controller 20 is configured to proceed to step S37 and to calculate the power train deliverable braking force Tbp as the sum of the braking force that can be obtained from the motor/generator 5 with the gear that the automatic transmission 3 will enter (calculated in Figure 24) and the first clutch connection braking force that can be obtained with the gear that the automatic transmission 3 will enter (calculated in step S28).

After calculating the power train deliverable braking force Tbp as shown in Figures 7(A) and 7(B), the integrated controller 20 is configured to proceed to steps S12 and S13 of Figure 6. In steps S12 and S13, the integrated controller 20 is configured to calculate the vehicle requested braking force Tbw requested by the driver and the target drive wheel braking force Tbr based on the master cylinder pressure Pm, respectively, using a map such as one shown in Figure 11. The target drive wheel braking force Tbr is, for example, set as a rear wheel braking force target value appropriate for achieving an ideal front and rear wheel braking force distribution (with which the front and rear wheels will lock simultaneously) with respect to the vehicle requested braking force Tbw.

In step S14, the integrated controller 20 is configured to compare the target driving/braking force tFo0 (negative value indicates braking force) calculated in step S0 of Figure 5 as explained previously to the negative value of the power train deliverable braking force Tbp calculated in step S11 (negative value is used to match signs because Tbp is calculated as a positive value) to determine if the target driving/braking force tFo0 is greater than the negative value of Tbp (tFo0 > -Tbp). In other words, the integrated controller 20 is configured to determine if the power train deliverable braking force Tbp is insufficient to achieve the target driving/braking force tFo0.

If the integrated controller 20 determines in step S 14 that the power train deliverable braking force Tbp is sufficient to produce the target driving/braking force tFo0, then the integrated controller 20 is configured to proceed to step S 15 and to set the drive wheel target automatic braking force tTbr to 0 because it is not necessary to generate a compensating braking force with automatic braking. On the other hand, if the integrated controller 20 determines in step S 14 that the power train deliverable braking force Tbp is not sufficient to produce the target driving/braking force tFo0, then the integrated controller 20 is configured to proceed to step S16 and to set the drive wheel target automatic braking force tTbr (the amount by which the drive train braking force is insufficient) to the difference between the target drive wheel braking force Tbr (determined in step S13) and the power train deliverable braking force Tbp because it is necessary to generate a compensating braking force with automatic braking.

After determining the target drive wheel automatic braking force tTbr, in step S 17, the integrated controller 20 is configured to subtract the target drive wheel braking force Tbr from the vehicle requested braking force Tbw (step S12) and to substitute the resulting difference value as the target automatic braking force tTbf of the non-drive wheels.

Accordingly, the target drive wheel automatic braking force tTbr and the target non-drive wheel automatic braking force tTbf are calculated in step S1 (subroutines illustrated in Figures 6, 7(A) and 7(B)) of Figure 5. In step S9 of Figure 5, the integrated controller 20 is configured to send the target drive wheel automatic braking force tTbr and the target non-drive wheel automatic braking force tTbf determined in step S1 to the brake-by-wire hydraulic brake system 23 shown in Figure 4. The brake-by-wire hydraulic brake system 23 is then configured to supply such a hydraulic pressure to the rear wheel cylinders that the target automatic braking force tTbr is generated at the rear wheels (drive wheels) 2 and to supply such a hydraulic pressure to the front wheel cylinders that the target automatic braking force tTbf is generated at the front wheels (not shown in the figures).

In the step S2 of the automatic braking force control shown in Figure 5, the integrated controller 20 is configured to use the prescribed gear shift map to determine a target gear SHIFT based on the accelerator position APO and the vehicle speed VSP. In step S9, the integrated controller 20 is configured to send the target gear SHIFT calculated in step S2 to a shift control section (not shown in figures) of the automatic transmission 3, and the automatic transmission 3 is configured and arranged to shift to the target gear SHIFT.

In step S3, the integrated controller 20 is configured to use a prescribed target traveling mode map to determine the traveling mode to be targeted (EV mode or HEV mode) based on the accelerator position APO and the vehicle speed VSP. The target traveling mode region map is normally configured such that the HEV mode is targeted when the vehicle is traveling under high load (large throttle opening)/high vehicle speed conditions and the EV mode is targeted when the vehicle is under a low load/low vehicle speed conditions.

In step S4, the integrated controller 20 is configured to compare the current traveling mode to the target traveling mode determined in step S3 and to execute a traveling mode transition computation. More specifically, if the current traveling mode and the target traveling mode match, the integrated controller 20 is configured to set commands to hold the traveling mode at the current EV mode or HEV mode. If the current traveling mode is the EV mode and the target traveling mode is the HEV mode, the integrated controller 20 is configured to set commands to change from the EV mode to the HEV mode. If the current mode is the HEV mode and the target mode is the EV mode, the integrated controller 20 is configured to set commands to change from the HEV mode to the EV mode. In step S9, the integrated controller 20 is configured to issue the commands set in step S4 to various parts of the control system to change the traveling mode or maintain the traveling mode in accordance with the commands.

In step S5, the integrated controller 20 is configured to compute a target transient driving/braking force tFo required in order to move from the current drive force to the final target driving/braking force tFo0 determined in step S1 with a prescribed response characteristic. For example, the target transient driving/braking force tFo can be computed by passing the final target driving/braking force tFo0 through a low pass filter having a prescribed time constant.

The method of calculating the target engine torque tTe in step S6 will now be explained. If the vehicle is in the HEV mode, the integrated controller 20 is first configured to calculate a target input torque tTi of the automatic transmission 3 that will be required in order to attain the target transient driving/braking force tFo calculated in step S5.

$$tTi = tFo \times Rt/if/iG \quad (1)$$

In the equation (1) above, the value Rt is the effective radius of the tires of the drive wheels 2, the value if is the final gear ratio, the value iG is the gear ratio of the automatic transmission 3 as determined by the currently selected gear.

The target engine torque tTe for HEV mode is calculated using the equation below based on the target input torque tTi, the input rotational speed Ni of the automatic transmission 3, the engine rotational speed Ne, and the target discharge power tP corresponding to the battery state of charge SOC (extractable electric power).

$$tTe = (tTi \times Ni - tP)/Ne \qquad (2)$$

If the vehicle will be changed from the EV mode to the HEV mode, then the integrated controller 20 is configured to calculate a target engine torque tTe required to start the engine 1 in connection with the mode change. If the vehicle will be changed from the HEV mode to the EV mode, then the integrated controller 20 is configured to set the target engine torque tTe to 0 for the EV mode transition because engine torque is not required in the EV mode. Similarly, if the vehicle will be held in the EV mode, the target engine torque tTe for the EV mode is set to 0 because the engine torque is not required in the EV mode. In step S9, the target engine torque tTe calculated in step S6 is sent to the engine controller 21 shown in Figure 4, and the engine controller 21 is configured to control the engine 1 such that the target engine torque tTe is attained.

In step S7 of Figure 5, the integrated controller 20 is configured to determine the target torque transfer capacity tTc1 of the first clutch 6 and the target torque transfer capacity tTc2 of the second clutch 7. If the vehicle is in the HEV mode, the integrated controller 20 is configured to set the target torque transfer capacities tTc1 and tTc2 of the first clutch 6 and the second clutch 7 to target values appropriate for the HEV mode. If the vehicle is switching from the EV mode to the HEV mode, the integrated controller 20 is configured to set the target torque transfer capacities tTc1 and tTc2 of the first clutch 6 and the second clutch 7 to target values appropriate for starting the engine 1 in connection with the mode change. If the vehicle is switching from the HEV mode to the EV mode, the integrated controller 20 is configured to set the target torque transfer capacities tTc1 and tTc2 of the first clutch 6 and the second clutch 7 to target values appropriate for changing to the EV mode. If the vehicle is in the EV mode, the integrated controller 20 is configured to set the target torque transfer capacities tTc1 and tTc2 of the first clutch 6 and the second clutch 7 to target values appropriate for the EV mode. The detailed explanations of the target torque transfer capacities tTc1 and tTc2 of the first clutch 6 and the second clutch 7, respectively, are omitted here because the target torque transfer capacities tTc1 and tTc2 are not related to the main point of the present invention. In step S9, the integrated controller 20 is configured to send the target torque transfer capacities tTc1 and tTc2 to the first clutch 6 and the second clutch 7, respectively, calculated in step S7 to control the first clutch 6 such that the target first clutch torque transfer capacity tTc1 is attained and the second clutch 7 such that the target second clutch torque transfer capacity tTc2 is attained.

After the target first and second clutch target torque transfer capacities tTc1 and tTc2 have been determined, the integrated controller 20 is configured to proceed to step S8 of Figure 5 and to calculate the target motor/generator torque tTm. If the vehicle is in the HEV mode, the integrated controller 20 is configured to set the target torque tTm of the motor/generator 5 to a target value appropriate for the HEV mode. If the vehicle is switching from the EV mode to the HEV mode, the integrated controller 20 is configured to calculate a target motor/generator torque tTm appropriate for starting the engine 1 in connection with the mode change. If the vehicle is switching from the HEV mode to the EV mode, the integrated controller 20 is configured to set the target motor/generator torque tTm to a target value appropriate for changing to the EV mode. If the vehicle is in the EV mode, the integrated controller 20 is configured to set the target motor/generator torque tTm to a target value appropriate for the EV mode. The details descriptions of the control executed in step S8 are omitted because setting of the target torque tTm is not related to the main point of the present invention. The integrated controller 20 is configured to send the target motor/generator torque tTm set in step S8 to the motor/generator controller 22 as shown in Figure 4 and the motor/generator controller 22 is configured to control the motor/generator 5 such that the motor/generator 5 delivers the target torque tTm.

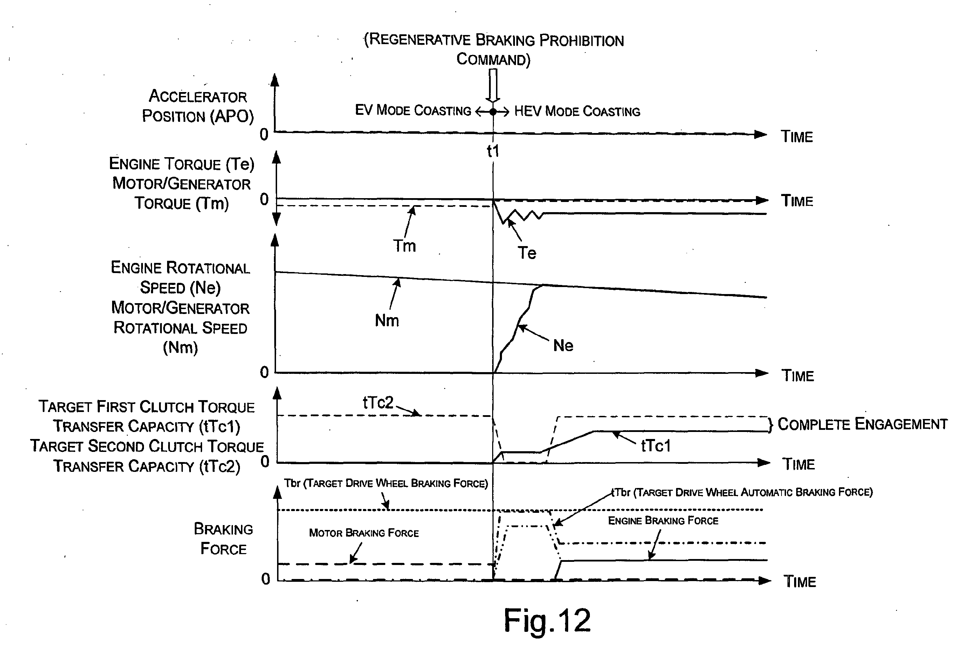

With the hybrid vehicle control device of the present invention, when the hybrid vehicle is coasting and the target driving/braking force tFo0 cannot be achieved with the power train deliverable braking force Tbp (step S14 of Figure 6), the amount by which the power train deliverable braking force Tbp is insufficient is compensated with the drive wheel automatic braking force tTbr determined in step S16 of Figure 6 such that the target driving/braking force tFo0 of the vehicle is maintained. The operational effects that are obtained as a result of this configuration will now be described. With reference to Figures 12 to 14.

Figure 12 is an operation time chart illustrating a case in which the vehicle is coasting in the EV mode (accelerator position APO = 0 and the motor/generator torque Tm < 0) and, at time t1, the battery 9 becomes fully charged such that the motor/generator 5 is prohibited from performing regenerative braking (indicated as motor/generator torque Tm = 0 after time t1). In order to utilize engine braking instead of regenerative braking, the vehicle shifts to the HEV mode by engaging the first clutch 6 (target torque transfer capacity tTc1 > 0) and rotating the crankshaft 1a of the engine 1 without supplying fuel to the engine 1 (engine speed Ne > 0 and engine torque Te < 0). In order to prevent an unpleasant change in braking force from being transmitted to the drive wheels 2 due to fluctuation of the engine torque Te when the crankshaft 1a first starts rotating, the second clutch 7 is released such that the target torque transfer capacity tTc2 thereof goes to zero.

During the period directly after the time t1 while the second clutch 7 is released (target torque transfer capacity tTc2 = 0), the drive wheels 2 are disconnected from both the engine 1 and the motor/generator 5 and the engine braking force remains at 0 as indicated by the solid curve in Figure 12 (the double-dot chain line indicates the engine braking force that would act on the drive wheels 2 if the second clutch 7 remained engaged). The motor braking force produced by the motor/generator 5 is also set to 0 because regenerative braking is prohibited. Thus, the sum of the engine braking force and the motor braking force, i.e., the power train deliverable braking force Tbp, equals 0. Consequently, the power train deliverable braking force Tbp is completely insufficient to attain the target drive wheel braking force Tbr while the second clutch 7 is disengaged and, without a compensating braking force, the coasting state of the vehicle will be temporarily interrupted by an odd feeling of thrusting forward (freewheeling). However, the hybrid vehicle control device of the present invention is configured to raise the drive wheel automatic braking force tTbr as shown in Figure 12 during the period when the second clutch 7 is released starting from the time t1. Since the amount by which the power train deliverable braking force Tbp is insufficient with respect to the target drive wheel braking force Tbr is offset (compensated for) by the target automatic braking force tTbr, the target driving/braking force tFo0 of the vehicle is maintained (held steady) and the coasting state of the vehicle can be prevented from being temporarily interrupted by an odd feeling of thrusting forward (freewheeling).

Additionally, since the automatic operation of the brake-by-wire hydraulic brake system 23 can exert the drive wheel automatic braking force tTbr against the drive wheels 2 with a high response speed, a compensating drive force (drive wheel automatic braking force tTbr) can be exerted substantially precisely at the time when the braking force Tbp delivered from the power train is lost due to the release of the second clutch 7. As a result, a situation in which the braking force acting on the drive wheels 2 deviates from the target as result of the compensating braking force (drive wheel automatic braking force tTbr) being exerted at an inappropriate timing can be avoided.

As explained above, the second clutch 7 is temporarily released (target torque transfer capacity tTc2 = 0) in order to avoid an unpleasant change in the braking force from transmitted to the drive wheels when the first clutch 6 is engaged and the crankshaft of the engine 1 starts rotating or cranking without fuel supplied to the engine in the example illustrated in the operation time chart shown in Figure 12. However, instead of completely releasing the second clutch 7, it is also acceptable to configure the integrated controller 20 to loosen (slip engaging) a connection of the second clutch 7 (target torque transfer capacity tTc2 > 0) to reduce the torque transfer capacity of the clutch 7 in order to avoid an unpleasant change in the braking force from transmitted to the drive wheels.

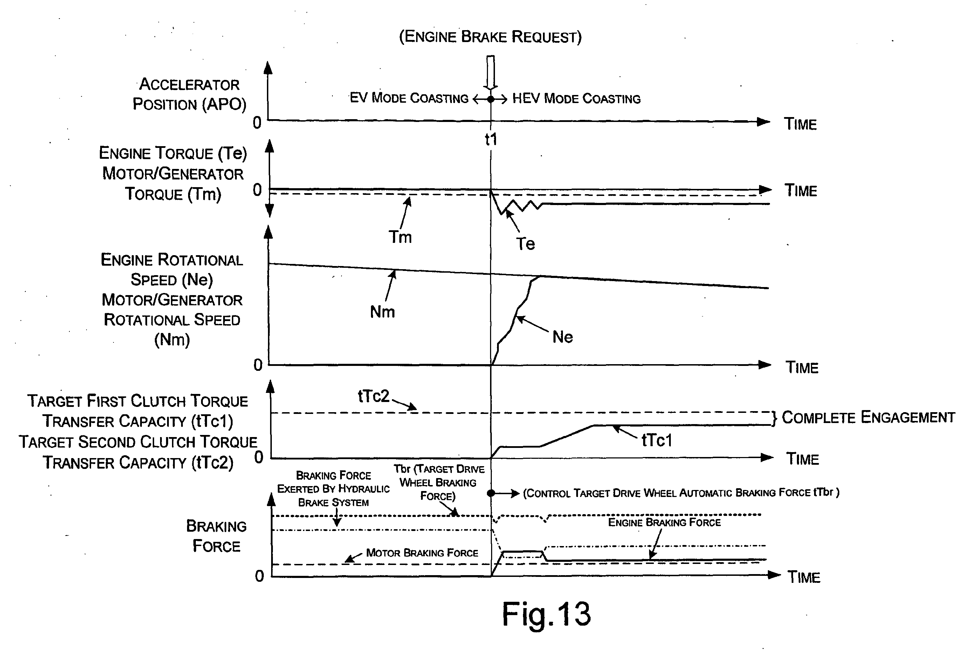

The drive wheel braking force compensation control in accordance with this embodiment can also be utilized when a hybrid vehicle is changed from a state of coasting in the EV mode to a state of coasting in the HEV mode in order to use an engine braking force to compensate for a deficiency in regenerative braking torque and the mode change is handled by engaging the first clutch 6 while leaving the second clutch 7 engaged as in Figure 13. By utilizing the present invention, the change in braking force that occurs due to variation of the engine torque Te during cranking can be offset in an effective manner as a result of the same operational effects as described above.

Figure 13 is an operation time chart illustrating a case in which the driver is depressing the brake pedal (operating the brake-by-wire hydraulic brake system 23) while the vehicle is coasting in the EV mode (accelerator position APO = 0 and motor/generator torque Tm < 0). At a time t1, a request for engine braking occurs to prevent the brake-by-wire hydraulic brake system 23 from vapor locking, and the vehicle switches to coasting in HEV mode.

In this case, the second clutch 7 remains engaged (torque capacity tTc2 > 0 as indicated Figure 13) after the time t1 while the first clutch 6 is progressively engaged by raising the target torque transfer capacity tTc1. The regenerative braking torque is supplemented by the engine braking force but the engine torque Te varies during cranking and causes the braking force to vary after the time t1 as shown in Figure 13. Consequently, there are times when the total braking force of the power train is too large or too small to satisfy the target braking force if the braking force of the brake-by-wire hydraulic brake system 23 remains the same.

With the drive wheel braking force compensation control in accordance with this embodiment, starting from the time t1 the braking force of the brake-by-wire hydraulic brake system 23 is adjusted by controlling the target drive wheel automatic braking force tTbr such that the sum of the braking force of the brake-by-wire hydraulic brake system 23, the engine braking force, and the motor braking force is equal to the target drive wheel braking force Tbr. As a result, the excess or deficiency of the braking force is resolved and the target braking force can be maintained.

Additionally, since the automatic operation of the brake-by-wire hydraulic brake system 23 can exert the target drive wheel automatic braking force tTbr against the drive wheels 2 with a high response speed, the compensating braking force (target drive wheel automatic braking force tTbr) can be adjusted substantially precisely at the time when the braking force becomes excessive or insufficient. As a result, a situation in which the braking force acting on the drive wheels 2 deviates from the target as result of the compensating braking force being adjusted at an inappropriate timing can be avoided.

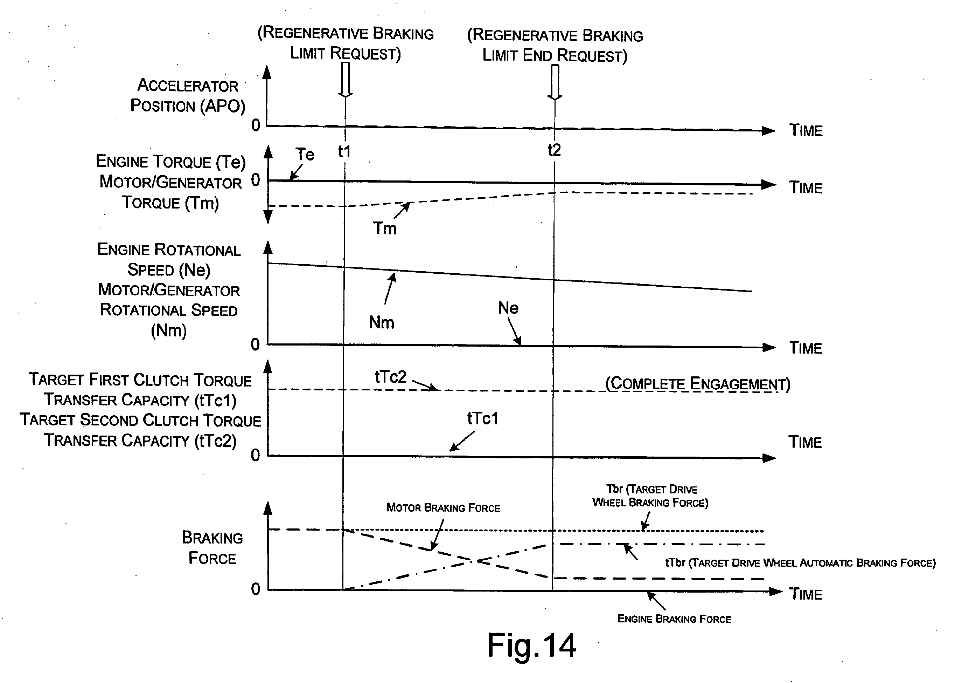

Furthermore, the drive wheel braking force compensation control in accordance with the present invention can also be utilized to effectively compensate for the change (decrease) in the braking force acting on the drive wheels 2 that occurs when the regenerative braking torque generated by the motor/generator 5 is limited so as to gradually decrease due to the state of charge the battery 9 gradually increasing while a hybrid vehicle is coasting in the EV mode as shown in Figure 14.

Figure 14 is an operation time chart illustrating a case in which the vehicle is coasting in the EV mode with the first clutch 6 released such that the target torque transfer capacity tTc1 is zero (tTc1 = 0), the second clutch 7 engaged such that the target torque transfer capacity tTc2 is larger than zero (tTc2 > 0), and the accelerator pedal released such that the throttle opening is zero (APO = 0). At time t1 a command is issued that limits regenerative braking by the motor/generator 5, and at time t2 a command is issued that ends the limitation of regenerative braking by the motor/generator 5.

In the period between the time t1 and the time t2, the torque Tm (Tm < 0) of the motor/generator 5 gradually changes as shown in Figure 14 in response to the aforementioned command. As the motor braking force gradually decreases as shown in Figure 14, the target drive wheel automatic braking force tTbr is gradually increased so as to compensate for the amount by which the motor braking force has decreased. As a result, the braking force acting on the drive wheels 2 is held at the target drive wheel braking force Tbr and the target braking force of the vehicle can be maintained.

Since the braking force compensation is accomplished by automatically operating the brake-by-wire hydraulic brake system 23 so as to obtain the target drive wheel automatic braking force tTbr, it is not necessary to change from the EV mode to the HEV mode in order to compensate for a deficiency in regenerative braking torque. Consequently, when the traveling conditions are such that it is better to remain in the EV mode, the change (decrease) in the braking force exerted against the drive wheels can be offset while keeping the vehicle in the more appropriate mode.

As explained previously with reference to Figures 7(A) and 7(B), the hybrid vehicle control device of the present invention is configured such that the power train deliverable braking force Tbp is set to the sum value of the motor braking force produced by the motor/generator 5 and the engine braking force (steps S34 and S36) when the second clutch 7 is engaged (step S29) and the first clutch 6 is also engaged (steps S32 and S33). As a result, the power train deliverable braking force Tbp can be calculated accurately when both the first clutch 6 and the second clutch 7 are engaged.

As also explained with reference to Figures 7 (A) and 7(B), the hybrid vehicle control device of the present invention is configured such that the power train deliverable braking force Tbp is set to the sum value of the motor braking force produced by the motor/generator 5 and the first clutch connection braking force corresponding to the torque transfer capacity tTc1 of the first clutch 6 (steps S35 and S37) when the second clutch 7 is engaged (step S29) and the first clutch 6 is in a slipping state lying between the engaged state and the released state (steps S32 and S33). As a result, the power train deliverable braking force Tbp can be calculated accurately when the first clutch 6 is in a slipping state and the second clutch 7 is engaged.

As also explained with reference to Figures 7 (A) and 7(B), the hybrid vehicle control device of the present invention is configured such that the motor braking force and the first clutch connection braking force are determined as braking forces that can be obtained with the current gear of the automatic transmission 3 (steps S34 and S35) when the automatic transmission 3 between the motor/generator 5 and the drive wheels 2 is not in the process of changing gears (No in step S31). Meanwhile, the motor braking force and the first clutch connection braking force are determined as braking forces that can be obtained with the gear that the automatic transmission 3 will enter (steps S36 and S37) when the automatic transmission 3 is in the process of changing gears (Yes in step S31). As a result, the power train deliverable braking force Tbp can be calculated accurately both when the automatic transmission 3 is not changing gears and when the automatic transmission 3 is changing gears.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Also as used herein to describe the above embodiment, the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention.

The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly engaged or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application No. 2005-322407, filed 7th November 2005, the contents of which are incorporated herein by reference in their entirety.

## Claims

1. A control system for a hybrid vehicle comprising:

   engine means;

   motor/generator means;

   first clutch means arranged to transfer torque between the engine means and the motor/generator means;

   second clutch means arranged to transfer torque between the motor/generator means and at least one drive wheel; and

   control means for selectively controlling the first and second clutch means to switch between an electric drive mode in which the engine means is stopped, the first clutch means is released and the second clutch means is engaged and a hybrid drive mode in which both of the first and second clutch means are engaged,

   wherein the control means is arranged to determine whether a powertrain braking force from a powertrain of the vehicle is sufficient to achieve a target braking force and to operate a wheel brake to apply a wheel braking force against a wheel of the vehicle to maintain the target braking force in dependence thereon when an accelerator pedal depressing amount is detected as being substantially zero.

2. A system as claimed in claim 1 wherein the control means is arranged to apply an engine braking force to the drive wheel to achieve the target braking force by temporarily slip engaging and/or disengaging the second clutch means, rotating a crankshaft means of the engine means with the motor/generator means while suspending supply of fuel to the engine means, and reengaging the second clutch means and to maintain the target braking force by controlling the wheel braking force of the wheel brake while the second clutch means is temporarily slip engaged and/or disengaged.

3. A system as claimed in claim 1 or claim 2 wherein the control means is arranged to set a sum value of a motor braking force of the motor/generator means and an engine braking force of the engine means as the powertrain braking force when both of the first and second clutch means are engaged.

4. A system as claimed in any preceding claim wherein the control means is arranged to set a sum value of a motor braking force of the motor/generator means and a first clutch connection braking force corresponding to the torque transfer capacity of the first clutch means as the powertrain braking force when the second clutch means is engaged and the first clutch means is in a slipping state between an engaged state and a released state.

5. A system as claimed in claim 4 wherein the control means is arranged to set a current motor braking force and a current first clutch connection braking force according to a current gear of a transmission provided in the powertrain between the motor/generator means and the drive wheel as the motor braking force and the first clutch connection braking force, respectively, when the transmission is not shifting gears and to set a target motor braking force and a target first clutch connection braking force according to a target gear of the transmission as the motor braking force and the first clutch connection braking force when the transmission is in shifting gears from the current gear to the target gear.

6. A system as claimed in any of claims 2 to 5 wherein the controller is arranged to reengage the second clutch means when a rotational speed difference across the second clutch is substantially zero.

7. A system as claimed in any preceding claim wherein the control means is arranged to obtain the braking force by shifting from a regenerative braking force applying state in which a regenerative braking force of the motor/generator is applied to the vehicle to an engine braking force applying state in which the braking force applied to the vehicle, when the accelerator pedal depressing amount is detected as being substantially zero.

**8.** A system as claimed in any preceding claim wherein the control means is arranged to operate the wheel brake to apply the braking force while the second clutch is slip engaged to a released state.

**9.** A method of controlling a hybrid vehicle comprising:

selectively changing a torque transfer capacity between an engine and a motor/generator using a first clutch;

selectively changing a torque transfer capacity between the motor/generator and at least one drive wheel of a vehicle;

selectively control the first and second clutches to switch between an electric drive mode in which the engine is stopped, the first clutch is released and the second clutch is engaged and a hybrid drive mode in which both of the first and second clutches are engaged;

shifting from a regenerative braking force applying state to an engine braking force applying state by temporarily slip engaging the second clutch, engaging the first clutch, cranking the engine with the motor/generator while suspending supply of fuel to the engine, and reengaging the second clutch, when the accelerator pedal depressing amount is detected as being substantially zero; and

operating a wheel brake to apply a wheel braking force to the vehicle while the engagement of the second clutch is slip engaged.

**10.** A vehicle having a system or adapted to use a method as claimed in any preceding claim.

## Fig. 1

AUTOMATIC
TRANSMISSION

ENGINE
SPEED Ne

MOTOR/GENERATOR
ROTATIONAL
SPEED Nm

INPUT
ROTATIONAL
SPEED Ni

OUTPUT
ROTATIONAL
SPEED No

## Fig. 2

AUTOMATIC
TRANSMISSION

ENGINE
SPEED Ne

MOTOR/GENERATOR
ROTATIONAL
SPEED Nm

INPUT
ROTATIONAL
SPEED Ni

OUTPUT
ROTATIONAL
SPEED No

## Fig. 3

AUTOMATIC
TRANSMISSION

ENGINE
SPEED Ne

MOTOR/GENERATOR
ROTATIONAL
SPEED Nm

INPUT
ROTATIONAL
SPEED Ni

OUTPUT
ROTATIONAL
SPEED No

Fig.4

EP 1 783 021 A2

START

COMPUTE FINAL TARGET DRIVING/BRAKING FORCE tFo0 — S0

COMPUTE TARGET AUTOMARIC BRAKING FORCES tTbr AND tTbf — S1

COMPUTE TARGET GEAR SHIFT — S2

COMPUTE TARGET TRAVELING MODE — S3

COMPUTE TRAVELING MODE TRANSITION — S4

COMPUTE TARGET TRANSIENT DRIVING/BRAKING FORCE tFo — S5

COMPUTE TARGET ENGINE TORQUE tTe — S6

COMPUTE TARGET FIRST AND SECOND CLUTCH TORQUE TRANSFER CAPACITIES tTc1 & tTc2 — S7

COMPUTE TARGET MOTOR/ GENERATOR TORQUE tTm — S8

OUTPUT COMMAND VALUES — S9

END

Fig.5

(TARGET AUTOMATIC BRAKING
FORCE COMPUTATION)
START

COMPUTE POWER TRAIN
DELIVERABLE BRAKING FORCE Tbp — S11

FIND VEHICLE REQUESTED BRAKING
FORCE Tbw BASED ON MASTER
CYLINDER PRESSURE Pm — S12

FIND TARGET DRIVE WHEEL
BRAKING FORCE Tbr BASED ON
MASTER CYLINDER PRESSURE Pm — S13

TARGET DRIVING/BRAKING FORCE
tFo0 > (POWER TRAIN DELIVERABLE
BRAKING FORCE Tbp)? — S14

NO (TARGET BRAKING FORCE CAN BE
GENERATED WITH POWER TRAIN)

YES (TARGET BRAKING FORCE CANNOT
BE SATISFIED WITH POWER TRAIN)

S16

SET TARGET DRIVE WHEEL AUTOMATIC
BRAKING FORCE tTbr TO VALUE OF
DIFFERENCE (TARGET DRIVE WHEEL
BRAKING FORCE Tbr – POWER TRAIN
DELIVERABLE BRAKING FORCE Tbp)

S15

SET TARGET DRIVE WHEEL
AUTOMATIC BRAKING FORCE tTbr
To 0

SET TARGET NON-DRIVE WHEEL
AUTOMATIC BRAKING FORCE tTbf TO
VALUE OF DIFFERENCE (VEHICLE
REQUESTED BRAKING FORCE
Tbw – TARGET DRIVE WHEEL BRAKING
FORCE Tbr) — S17

RETURN

Fig.6

```
            ┌──────────────────────────┐
            │  (POWER TRAIN DELIVERABLE │
            │  BRAKING FORCE COMPUTATION)│
            │         START            │
            └──────────────────────────┘
```

COMPUTE DELIVERABLE OUTPUT TORQUE OF MOTOR/GENERATOR
AT CURRENT BATTERY STATE OF CHARGE
(DELIVERABLE BATTERY OUTPUT POWER / MOTOR ROTATIONAL SPEED X MOTOR EFFICIENCY) — S21

FIND EFFICIENCY OF AUTOMATIC TRANSMISSION BASED ON INPUT ROTATIONAL SPEED Ni AND
SELECTED GEAR OF AUTOMATIC TRANSMISSION — S22

COMPUTE MOTOR BRAKING FORCE AT CURRENT GEAR
(DELIVERABLE OUTPUT TORQUE OF MOTOR GENERATOR X CURRENT GEAR RATIO OF
AUTOMATIC TRANSMISSION X DIFFERENTIAL GEAR RATIO / TIRE EFFECTIVE RADIUS / EFFICIENCY) — S23

COMPUTE MOTOR BRAKING FORCE AT TARGET GEAR
(DELIVERABLE OUTPUT TORQUE OF MOTOR GENERATOR X TARGET GEAR RATIO OF AUTOMATIC
TRANSMISSION X DIFFERENTIAL GEAR RATIO / TIRE EFFECTIVE RADIUS / EFFICIENCY) — S24

COMPUTE ENGINE BRAKING FORCE AT CURRENT GEAR
(ENGINE FRICTION TORQUE X CURRENT GEAR RATIO OF AUTOMATIC TRANSMISSION X
DIFFERENTIAL GEAR RATIO / TIRE EFFECTIVE RADIUS / EFFICIENCY) — S25

COMPUTE ENGINE BRAKING FORCE AT TARGET GEAR
(ENGINE FRICTION TORQUE X TARGET GEAR RATIO OF AUTOMATIC TRANSMISSION X
DIFFERENTIAL GEAR RATIO / TIRE EFFECTIVE RADIUS / EFFICIENCY) — S26

COMPUTE FIRST CLUTCH CONNECTION BRAKING FORCE AT CURRENT GEAR
(TARGET FIRST CLUTCH TORQUE TRANSFER CAPACITY tTc1 X CURRENT GEAR RATIO OF
AUTOMATIC TRANSMISSION X DIFFERENTIAL GEAR RATIO / TIRE EFFECTIVE RADIUS / EFFICIENCY) — S27

COMPUTE FIRST CLUTCH CONNECTION BRAKING FORCE AT TARGET GEAR
(TARGET FIRST CLUTCH TORQUE TRANSFER CAPACITY tTc1 X TARGET GEAR RATIO OF
AUTOMATIC TRANSMISSION X DIFFERENTIAL GEAR RATIO / TIRE EFFECTIVE RADIUS / EFFICIENCY) — S28

( A )

# Fig.7(A)

Fig.7(B)

Fig.8

Fig.9

ENGINE FRICTION TORQUE (Nm)

0

0    ENGINE ROTATIONAL SPEED
Ne(rpm)

## Fig.10

VEHICLE REQUESTED BRAKING FORCE Tbw (N)
TARGET DRIVE WHEEL BRAKING FORCE Tbr
TARGET NON-DRIVE WHEEL BRAKING FORCE Tbf

Tbw (VEHICLE REQUESTED BRAKING FORCE)

Tbf (TARGET NON-DRIVE WHEEL
BRAKING FORCE)

Tbr (TARGET DRIVE WHEEL
BRAKING FORCE)

0

0    MASTER CYLINDER PRESSURE Pm (kPa)

## Fig.11

Fig.12

EP 1 783 021 A2

(ENGINE BRAKE REQUEST)

ACCELERATOR POSITION (APO)

EV MODE COASTING ←●→ HEV MODE COASTING

0 ——————————————————→ TIME

t1

ENGINE TORQUE (Te) MOTOR/GENERATOR TORQUE (Tm)

0 ——————————————————→ TIME

Tm

Te

ENGINE ROTATIONAL SPEED (Ne) MOTOR/GENERATOR ROTATIONAL SPEED (Nm)

Nm

Ne

0 ——————————————————→ TIME

TARGET FIRST CLUTCH TORQUE TRANSFER CAPACITY (tTc1) TARGET SECOND CLUTCH TORQUE TRANSFER CAPACITY (tTc2)

tTc2

} COMPLETE ENGAGEMENT

tTc1

0 ——————————————————→ TIME

BRAKING FORCE EXERTED BY HYDRAULIC BRAKE SYSTEM

Tbr (TARGET DRIVE WHEEL BRAKING FORCE)

(CONTROL TARGET DRIVE WHEEL AUTOMATIC BRAKING FORCE tTbr)

BRAKING FORCE

ENGINE BRAKING FORCE

MOTOR BRAKING FORCE

0 ——————————————————→ TIME

Fig.13

EP 1 783 021 A2

Fig.14

**REFERENCES CITED IN THE DESCRIPTION**

**Patent documents cited in the description**

- JP 11082260 A
- JP 11093724 A

- JP 2005322407 A